# DEMANDE DE BREVET EUROPEEN

(11) **EP 1 372 232 A1**
(43) Date de publication de la demande: **17.12.2003**
(21) Numéro de dépôt: 03291401.2
(22) Date de dépôt: 12.06.2003
(51) Int. Cl.: H02B 1/46

(54) **Boîtier électrique avec verrou articulé**

(30) Priorité: 13.06.2002 FR 0207277
(71) Demandeur: LEGRAND, F-87000 Limoges (FR)
(72) Inventeur: Coste, Gilles, 87350 Panazol (FR); Mazabraud, Pierre, 87000 Limoges (FR); Voriot, Benoit, 87350 Panazol (FR)
(74) Mandataire: Lepelletier-Beaufond, François

(57) **Abrégé**

Boîte (1) comportant un socle (2) un couvercle (3) propre à être emboîté sur le socle (2) et, pour la fixation du couvercle (3) au socle (2), un verrou (16) articulé entre une position de verrouillage dans laquelle il assure le verrouillage du couvercle (3) sur le socle (2), et une position de déverrouillage dans laquelle il permet leur séparation.

Suivant l'invention, le verrou (16) comporte un doigt (36) apte, en position de verrouillage, à venir se loger simultanément dans deux fenêtres (28, 31) pratiquées respectivement dans le couvercle (3) et le socle (2) et à solliciter en permanence le couvercle (3) vers le socle (2) et, en position de déverrouillage, à s'écarter de l'une des fenêtres (28, 31) au moins.

## Description

L'invention concerne les boîtes, notamment les coffrets pour appareillage électrique, qui comportent généralement un socle, lequel peut être fixé à une paroi murale, et un couvercle propre à être emboîté sur le socle pour fermer la boîte.

Au problème de la fixation et du verrouillage du couvercle sur le socle, de nombreuses solutions ont été proposées par le passé.

L'une d'elles consiste, tout simplement, à visser le couvercle sur le socle. Cette solution a l'avantage de la simplicité et de la fiabilité.

Toutefois, elle nécessite une intervention assez longue, tant pour le montage du couvercle que pour son démontage. De plus, les vis échappent souvent des mains de l'utilisateur, ce qui allonge encore la durée de l'intervention,

Une autre solution consiste à prévoir des moyens pour l'encliquetage du couvercle sur le socle, par exemple sous la forme d'organes élastiques rapportés, tels que des agrafes. L'expérience a cependant révélé la faiblesse de tels moyens d'encliquetage, qui laissent généralement un jeu entre le couvercle et le socle, et ont tendance à se déformer, voire à casser, au détriment de la tenue de la boite.

Ajoutons que, pour des raisons de sécurité, la norme impose que le démontage du couvercle soit effectué à l'aide d'un outil tel qu'un tournevis.

Encore une autre solution a proposé des organes de verrouillage articulés entre une position de verrouillage dans laquelle ils immobilisent le couvercle par rapport au socle, et une position de déverrouillage dans laquelle il permettent leur séparation.

Une telle solution, illustrée par la demande de brevet européen au nom de la demanderesse, publiée sous le numéro EP-1 104 064, a apporté et continuera d'apporter satisfaction.

Néanmoins, la demanderesse a souhaité améliorer la tenue du couvercle sur le socle, et rendre plus pratique la manoeuvre des organes de verrouillage afin de faciliter et accélérer tant le montage du couvercle que son démontage.

C'est dans cette perspective que l'invention propose une boîte comportant un socle, un couvercle propre à être emboîté sur le socle et, pour la fixation du couvercle au socle, un verrou articulé entre une position de verrouillage dans laquelle il assure le verrouillage du couvercle sur le socle, et une position de déverrouillage dans laquelle il permet leur séparation, le verrou comportant un doigt apte, en position de verrouillage, à venir se loger simultanément dans deux fenêtres pratiquées respectivement dans le socle et le couvercle et à solliciter en permanence le couvercle vers le socle et, en position de déverrouillage, à s'écarter de l'une d'elles au moins.

De la sorte, le couvercle est fixé au socle rigidement, sans aucun jeu, ce qui accroît sensiblement la tenue et la fiabilité de la boîte.

De plus, la manipulation de cette boîte est très pratique, son montage et son démontage étant à la fois simples et rapides.

D'autres caractéristiques et avantages de l'invention apparaîtront à la lumière de la description qui va suivre d'un mode de réalisation donné à titre d'exemple non limitatif, description faite en référence aux dessins annexés dans lesquels :
- la figure 1 est une vue en perspective d'une boîte posée à plat, en l'occurrence un coffret pour appareillage électrique, qui comporte un socle, un couvercle et, pour la fixation du couvercle sur le socle, des verrous montés articulés sur le couvercle, aux quatre coins de celui-ci ; sur cette figure, les verrous sont représentés en position de verrouillage, dans laquelle ils assurent l'immobilisation du couvercle par rapport au socle ;
- la figure 2 est une vue analogue à la figure 1, sans les verrous ;
- la figure 3 est une vue d'élévation en perspective du coffret de la figure 1, selon un détail matérialisé sur cette figure par l'encart lll ;
- la figure 4 est une vue similaire à la figure 3, suivant une variante de réalisation ;
- les figures 5 à 15 illustrent un premier mode de réalisation du coffret ;

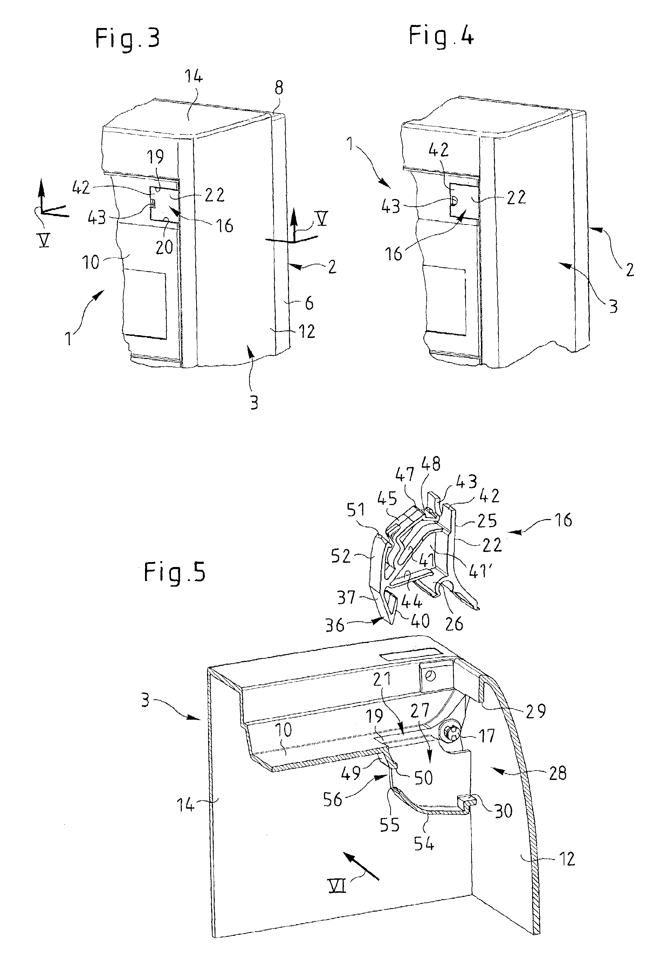

- la figure 5 est une vue de détail en coupe, en perspective éclatée, suivant le plan de coupe V-V de la figure 3, illustrant le couvercle de la boîte et, séparé du couvercle mais orienté pour y être monté, le verrou ;

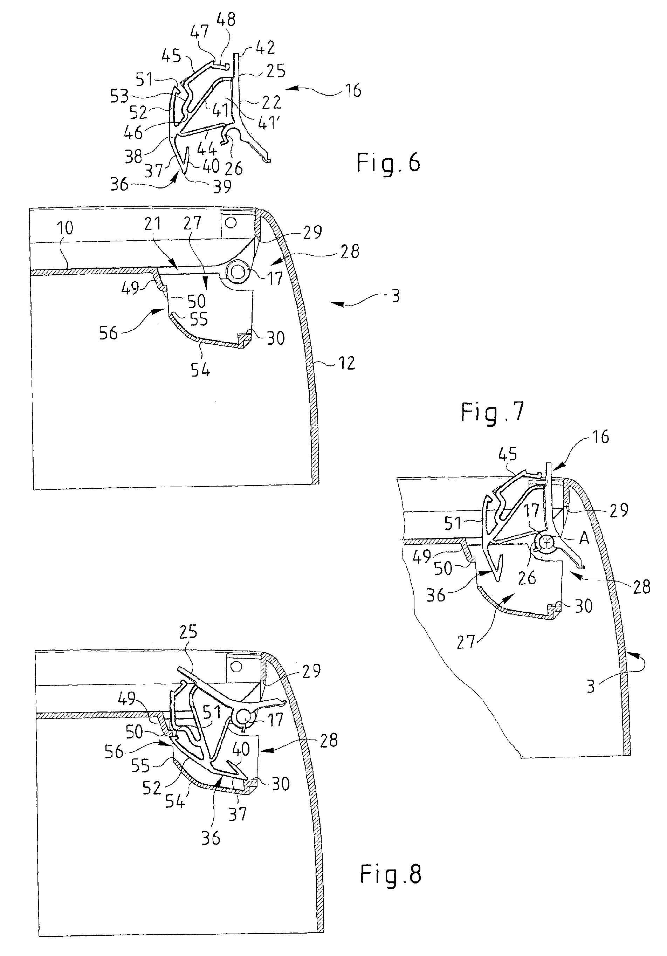

- la figure 6 est une vue partielle d'élévation en coupe, éclatée, du couvercle et du verrou illustrés sur la figure 5, suivant un angle de vue matérialisé sur cette figure par la flèche Vl;
- la figure 7 est une vue analogue à la figure 6, après assemblage du verrou au couvercle,
- la figure 8 est une vue analogue à la figure 7, après mise en place du verrou dans sa position de déverrouiliage ;

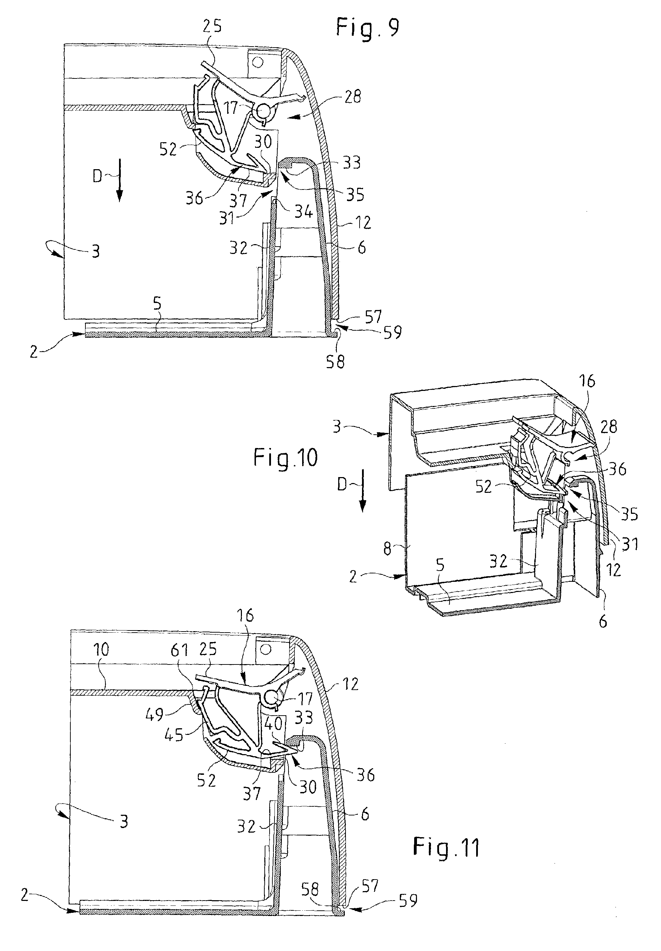

- la figure 9 est une vue analogue à la figure 8, qui représente le coffret après que le couvercle a été emboîté sur le socle, le verrou étant encore dans sa position de déverrouillage tel que représenté sur la figure 8,
- la figure 10 est une vue de détail en perspective, en coupe, du coffret de la figure 9, suivant le même angle de vue que sur la figure 5 :

- la figure 11 est une vue similaire à la figure 9, pendant la manoeuvre du verrou, tendant à le faire passer de sa position de déverrouillage à sa position de verrouillage ;

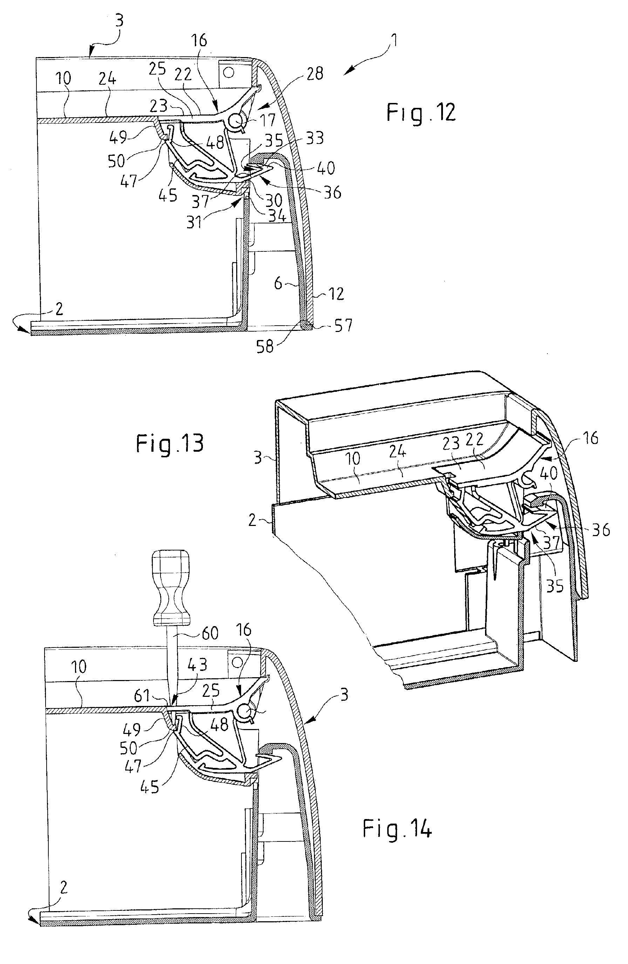

- la figure 12 est une vue similaire à la figure 11, en position de verrouillage du verrou, le couvercle étant alors immobilisé par rapport au socle ;
- la figure 13 est une vue similaire à la figure 10, en position de verrouillage du verrou, comme sur la figure 12 ;
- la figure 14 est une vue similaire à la figure 12, sur laquelle est représenté un tournevis dont la pointe va servir à débloquer le verrou ;

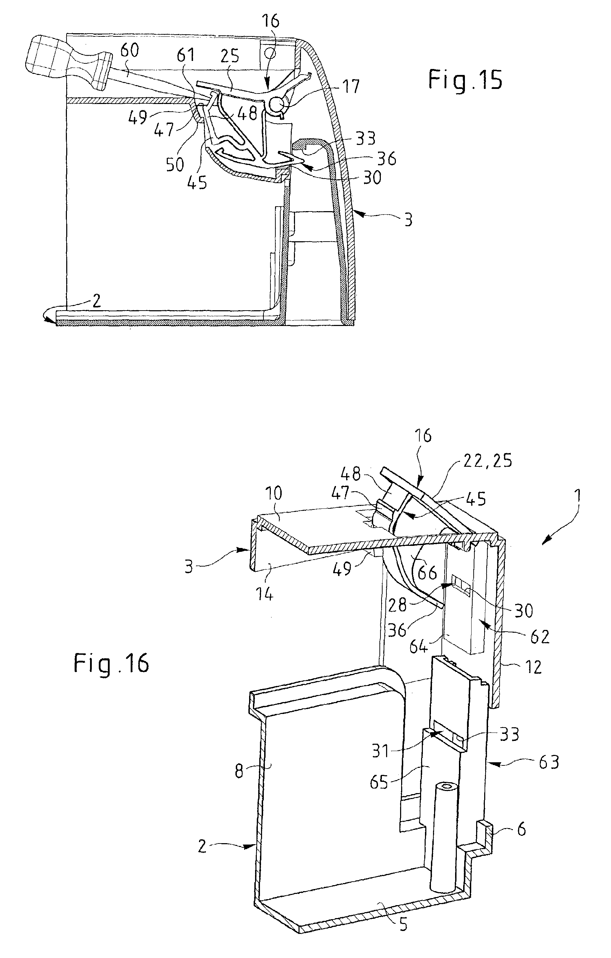

- la figure 15 est une vue analogue à la figure 14, au cours de l'opération de déblocage du verrou, effectuée au moyen du tournevis de la figure 14 ;
- les figures 16 à 18 illustrent un second mode de réalisation du coffret ;
- la figure 16 est une vue analogue à la figure 10 ;

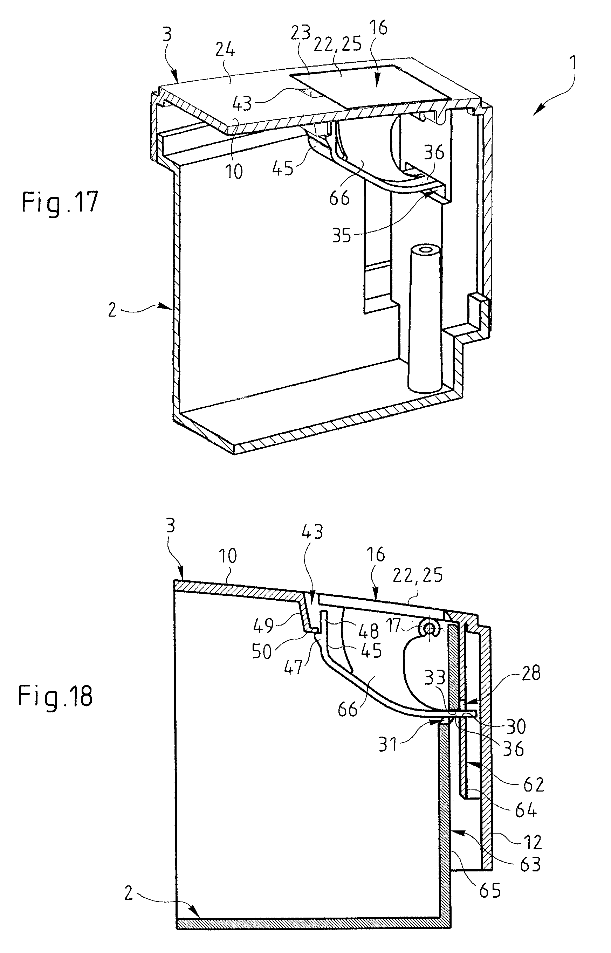

- la figure 17 est une vue analogue à la figure 13 ;
- la figure 18 est une vue analogue à la figure 12.

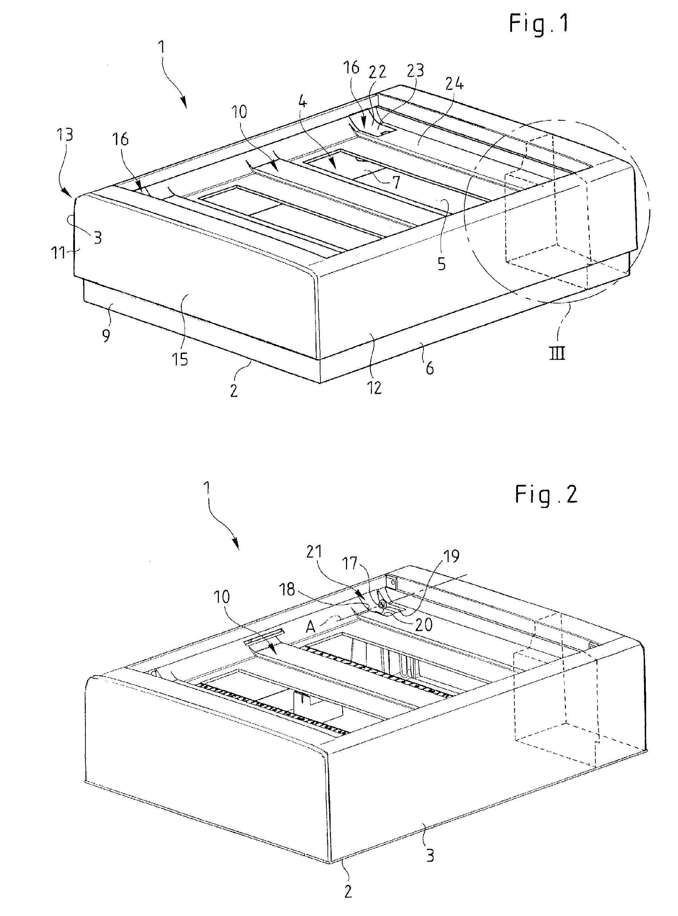

Sur la figure 1 est représentée une boîte 1. Il s'agit en l'occurrence d'un coffret pour appareillage électrique, mais il pourrait s'agir de tout autre type de boîte, telle qu'une boîte de rangement.

Ce coffret 1 comporte un socle 2 formant le corps de boîte (c'est-à-dire qu'il délimite le volume interne du coffret 1) et un couvercle 3 qui, pour former le coffret 1, vient s'emboîter sur le socle 2 en le recouvrant au moins partiellement.

Il n'est pas nécessaire que le volume interne du coffret 1 soit clos lors de l'emboîtement du couvercle 3. Ainsi, celui-ci peut présenter une ou plusieurs ouvertures 4 permettant l'accès au contenu du coffret 1, ou la saillie d'une partie de ce contenu, tel que, dans le cas d'appareils de commutation (interrupteurs différentiels, disjoncteurs), la partie de commande de ceux-ci.

Le socle 2, qui présente ici une forme prismatique et peut être directement fixé sur une paroi murale (non représentée), comporte une paroi de fond 5 bordée par deux parois latérales 6, 7 en regard, reliées par une paroi supérieure 8 et une paroi inférieure 9 en regard.

Le couvercle 3 comporte quant à lui une paroi frontale 10 bordée par une jupe 11 formée de deux parois latérales 12, 13 en regard, reliées par une paroi supérieure 14 et une paroi inférieure 15.

Lors de l'emboîtement du couvercle 3 sur le socle 2, réalisé suivant une direction D perpendiculaire à la paroi de fond 5, la jupe 11 vient coulisser, en les recouvrant, sur les parois 6 à 9 du socle 2.

Le coffret 1 comporte en outre, pour la fixation réversible du couvercle 3 au socle 2, au moins un verrou 16 articulé entre une position dite de verrouillage dans laquelle il assure le verrouillage, l'immobilisation du couvercle 3 par rapport au socle 2 (figure 13) et une position de déverrouillage dans laquelle il permet leur séparation (figure 10).

En l'occurrence, quatre verrous 16 sont prévus, disposés au quatre coins du coffret 1.

Chacun d'eux est monté articulé sur le couvercle 3. Plus précisément, chaque verrou 16 est monté pivotant sur le couvercle 3, à proximité de la jonction entre une paroi latérale 12, 13 et la paroi supérieure 14 (respectivement, inférieure 15), autour d'un axe A parallèle à la paroi latérale 12, 13 et perpendiculaire à la direction d'emboîtement D.

En pratique, pour les besoins du moulage du couvercle 3 qui est ici réalisé dans une matière thermoplastique, et tel qu'il apparaît notamment sur la figure 2, l'axe d'articulation A est formé de deux tourillons 17, 18 en regard qui, venus de matière avec l'ensemble du couvercle 3, saillent des bords 19, 20 d'une ouverture 21 que vient combler le verrou 16 en position de verrouillage (figures 1, 3, 4).

Le verrou 16 est quant à lui une pièce monobloc, également réalisée par moulage d'une matière thermoplastique, qui comporte un bras 22 dont la forme coudée est complémentaire de l'ouverture 21, et qui est, depuis l'extérieur du coffret 1, la partie visible du verrou 16 lorsque celui-ci est en position de verrouillage (figures 1, 3, 4). Le bras 22 présente une face externe 23 qui, en position de verrouillage, affleure la face externe 24 de la paroi frontale 10 du couvercle 3.

Ce bras 22 forme un levier 25 au moyen duquel il est possible de manoeuvrer le verrou 16, comme nous le verrons par la suite.

Le verrou 16 comporte aussi un crochet 26 saillant du bras 22 à l'opposé de sa face externe 23, au droit de son coude, c'est-à-dire à l'une des extrémités du levier 25.

Ce crochet 26, qui est élastiquement flexible, est prévu pour l'encliquetage du verrou 16 sur les tourillons 17, 18. A cet effet, il présente une forme en C, complémentaire des tourillons 17, 18, vers lesquels est tournée son ouverture lors du montage du verrou 16, tel que représenté sur les figures 5 à 7.

Une fois le verrou 16 monté sur le couvercle 3, il se trouve intégré dans un logement 27 ménagé pour lui dans le couvercle 3, ce logement 27 débouchant par l'ouverture 21 vers l'extérieur, du côté de la paroi frontale 10.

Tel qu'il apparaît notamment sur la figure 6, une première fenêtre 28 jouxtant ce logement 27 est pratiquée dans le couvercle 3, en regard de la paroi latérale 12, 13 voisine (en l'occurrence, il s'agit de la paroi 12). Le logement 27 débouche ainsi, par cette fenêtre 28, sur la paroi latérale 12, qui est quant à elle continue pour présenter depuis l'extérieur un aspect lisse.

Cette fenêtre 28, qui s'étend sensiblement suivant un plan parallèle à la direction d'emboîtement D et à la paroi latérale 12 voisine, est délimitée, d'une part, du côté de la paroi frontale 10, par un bord supérieur 29 qui, tourné vers la paroi de fond 5 du socle 2 lorsque le couvercle 3 y est emboîté, s'étend sensiblement perpendiculairement à la direction d'emboîtement D et parallèlement à la paroi latérale 12 voisine et, d'autre part, du côté opposé, par un bord inférieur 30 qui, en regard du bord supérieur 29, est tourné à son opposé (c'est-à-dire à l'opposé de la paroi de fond 5 du socle 2 lorsque le couvercle 3 y est emboîté) et s'étend sensiblement parallèlement à lui (c'est-à-dire perpendiculairement à la direction d'emboîtement D et parallèlement à la paroi latérale 12 voisine).

Une seconde fenêtre 31 est pratiquée dans le socle 2, dans une cloison 32 voisine de la paroi latérale 6, 7 (en l'occurrence, la paroi 6) et sensiblement parallèle à celle-ci. Ainsi, cette seconde fenêtre 31 s'étend, comme la première 28, sensiblement dans un plan parallèle à la direction d'emboîtement D.

Cette seconde fenêtre 31 est délimitée, du côté opposé à la paroi de fond 5, par un bord supérieur 33 qui, tourné vers la paroi de fond 5, s'étend à la fois perpendiculairement à la direction d'emboîtement D et parallèlement à la paroi latérale 6 voisine.

La seconde fenêtre 31 est par ailleurs délimitée, du côté de la paroi de fond 5, par un bord inférieur 34 en regard du bord supérieur 33, c'est-à-dire tourné à l'opposé de la paroi de fond 5, et qui s'étend, comme le bord supérieur 33, perpendiculairement à la direction d'emboîtement D et parallèlement à la paroi latérale 6 voisine.

Les fenêtres 28, 31 sont localisées de telle manière qu'elles soient adjacentes et sensiblement en face l'une de l'autre lorsque le couvercle 3 est emboîté sur le socle 2. En pratique, compte tenu de leurs dimensions respectives, les fenêtres 28, 31 se chevauchent, en sorte qu'il persiste un certain décalage entre elles, suivant la direction d'emboîtement D (Cf. figure 9).

En position emboîtée du couvercle 3, tel qu'il apparaît sur les figures 9 à 13, la première fenêtre 28 est décalée, par rapport à la seconde 31, vers l'intérieur du coffret 1. Plus précisément, le bord inférieur 30 de la première fenêtre 28 se trouve en regard du bord supérieur 33 de la seconde 31, tout en étant décalé, par rapport à lui, vers l'intérieur du coffret 1.

Ainsi, les parties des fenêtres 28, 31 qui se chevauchent forment une ouverture 35 délimitée, d'une part par le bord inférieur 30 de la première fenêtre 28, et d'autre part par le bord supérieur 34 de la seconde 31.

Le verrou 16 comporte un doigt 36 qui, pour assurer l'immobilisation du couvercle 3 sur le socle 2, est apte, en position de verrouillage, à traverser l'ouverture 35 pour venir se loger simultanément dans les deux fenêtres 28, 31 et qui, pour permettre la séparation du couvercle 3 du socle 2, est apte à s'écarter de l'une d'elles au moins. En l'occurrence, le verrou 16 étant monté sur le couvercle 3, il suffit que le doigt 36 s'écarte de la seconde fenêtre 31.

Le doigt 36 est conformé pour solliciter en permanence, en position de verrouillage, le capot 3 vers le socle 2.

A cet effet, et tel qu'il apparaît sur la figure 6, le doigt 36 présente en section un profil en V : il comporte un bras 37 raccordé, par une première extrémité 38, au levier 25, ce bras 37 étant prolongé, au-delà d'une deuxième extrémité 39 en forme de pointe, opposée à la première 38, par une languette 40 en rebroussement.

Le doigt 36 est conformé pour qu'en position de verrouillage, le bras 37 vienne s'appliquer contre le bord inférieur 30 de la première fenêtre 28, et pour que, conjointement, la languette 40 vienne s'appliquer contre le bord supérieur 33 de la seconde fenêtre 31.

Le matériau du verrou 16 est choisi pour que, compte tenu de la forme du doigt 36, la languette 40 soit élastiquement flexible.

En position de verrouillage, l'ensemble du doigt 36 est comprimé entre le bord inférieur 30 de la première fenêtre 28 et le bord supérieur 33 de la seconde 31. Le socle 2 et le couvercle 3 ayant tendance à se séparer, cette compression se traduit en fait par une flexion de la languette 40 en direction du bras 37.

En réaction à cette compression, le doigt 36 a tendance, à la manière d'une came, à écarter les bords 30, 33 l'un de l'autre. Cette réaction se traduit en fait par une tendance de la languette 40 à se déployer sous l'effet de sa propre élasticité, de sorte qu'elle sollicite le bord supérieur 33 de la seconde fenêtre 31 pour l'éloigner du bord inférieur 30 de la première 28.

Tel qu'il apparaît sur la figure 6, le bras 37 est relié, d'une part, au levier 25 par l'intermédiaire d'une première traverse 41 qui se raccorde à celui-ci à proximité d'une extrémité de manoeuvre 42 qui est creusée, d'une échancrure 43 dont la fonction apparaîtra dans ce qui suit.

Le bras 37 est relié, d'autre part, au crochet 26 par l'intermédiaire d'une seconde traverse 44 qui rejoint la première 41 à proximité de la première extrémité 38 du bras 37 en formant avec cette première traverse 41 un angle, de sorte que les deux traverses 41, 44 présentent conjointement, en section, un profil en V.

En outre, le verrou 16 comporte un voile 41' qui s'étend dans l'espace sensiblement triangulaire délimité par le bras 22 et les traverses 41, 44, dans un plan perpendiculaire au bras 22.

Cette configuration garantit au verrou 16 à la fois rigidité et légèreté.

Afin d'éviter toute séparation intempestive du couvercle 3 et du socle 2 alors qu'ils étaient pourtant verrouillés, il est préférable de prévoir des moyens pour bloquer, de manière réversible, le verrou 16 en position de verrouillage.

Ces moyens de blocage peuvent être prévus à même le verrou 16. Ainsi, tel que représenté sur la figure 6, le verrou 16 est muni d'une languette 45 élastiquement flexible qui se raccorde à la première traverse 41 par une racine 46 du côté opposé au crochet 26, et s'étend en porte-à-faux, depuis sa racine 46, en direction de l'extrémité de manoeuvre 42 du levier 25, c'est-à-dire à l'opposé du doigt 36.

La languette 45 présente, du côté de son extrémité libre, c'est-à-dire à l'opposé de sa racine 46, un décrochement formant une dent 47, au-delà de laquelle la languette 45 présente une tête 48.

Le couvercle 3 comporte quant à lui un retour 49 qui se raccorde à la paroi frontale 10, et qui, bordant l'ouverture 21 du côté opposé à la fenêtre 28, se termine par un bord libre 50 orienté vers celle-ci.

En position de verrouillage du verrou 16, la languette 45 se trouve en prise avec le bord 50 par l'intermédiaire de la dent 47 qui, butant contre le bord 50, s'oppose au mouvement du verrou 16 et le bloque ainsi en position de verrouillage.

Nous verrons ci-après comment il est possible d'agir sur la languette 45 pour, en l'écartant du bord 50, débloquer le verrou 16.

Par ailleurs, afin d'empêcher un utilisateur de séparer facilement le verrou 16 du couvercle 3, il peut être souhaitable de limiter la course angulaire du verrou 16 entre sa position de verrouillage et sa position de déverrouillage.

A cet effet, tel que représenté sur les figures 6 et 8, le verrou 16 est muni d'une butée 51 apte, en position de déverrouillage, à venir s'appliquer contre le bord 50 pour empêcher le verrou 16 de pivoter au-delà de sa position de déverrouillage.

En l'occurrence, cette butée 51 est formée par l'extrémité libre d'une languette 52 élastiquement flexible qui est raccordée à la première traverse 41 à proximité de la première extrémité 38 du bras 37, et qui s'étend sensiblement en porte-à-faux dans le même sens que la languette de blocage 45, c'est-à-dire à l'opposé du doigt 36.

En utilisation normale du coffret 1, il est impossible d'accéder depuis l'extérieur à la languette 52, qui garantit ainsi le maintien du verrou 16 sur le couvercle 3.

Toutefois, lorsqu'il est nécessaire de remplacer le verrou 16, par exemple en cas de casse ou de dysfonctionnement, il est possible, depuis l'intérieur du couvercle 3, d'agir sur la languette 52 en la sollicitant vers la première traverse 41. Compte tenu de la proximité de la languette de blocage 45, celle-ci présente une partie coudée 53 formant un renfoncement permettant un débattement angulaire de la languette 52 suffisant pour que son extrémité 51 s'écarte du bord 50.

Toutefois, afin d'éviter que le verrou 16 n'aille au-delà de sa position de déverrouillage de manière intempestive, il est préférable de limiter, même intérieurement, l'accès à cette languette 52.

Ainsi, tel que représenté sur la figure 8, le couvercle 3 est pourvu d'une cloison 54 qui, délimitant le logement 27 du côté opposé à l'ouverture 21, obstrue l'accès à la languette 52 sans toutefois l'interdire complètement. En effet, la cloison 54 présente, en regard du bord 50, un bord libre 55 qui délimite, conjointement à celui-ci, un espace 55 suffisant pour permettre le passage de la pointe d'un outil propre à agir sur la languette 52 pour l'écarter du bord 50.

Par ailleurs, tel qu'il apparaît sur la figure 8, la cloison 54 présente, à l'opposé du bord 55, un autre bord libre qui forme le bord inférieur 30 de la première fenêtre 28.

Pour assembler, monter et démonter le coffret 1 qui vient d'être décrit, l'on procède comme suit.

On commence par assembler les verrous 16 et le couvercle 3. Cette opération a généralement lieu avant la livraison du coffret 1 au client final. Pour ce faire, on place chaque verrou 16 à l'aplomb de son logement 27, l'ouverture du crochet 26 tournée vers l'axe A (figures 5 et 6).

On encliquette ensuite le verrou 16 sur l'axe A, c'est-à-dire, en pratique, par coopération à force du crochet 26 avec les tourillons 17, 18, tout en conservant pour le verrou 16 l'orientation définie ci-dessus.

On agit ensuite sur le levier 25 pour faire pivoter le verrou 16 autour de son axe A dans le sens indiqué par la pointe du doigt 36.

La languette 52 glisse alors sur le bord 50 qui la repousse vers la première traverse 41, jusqu'à ce que l'extrémité libre 51 dépasse le bord 50, la languette 52 reprenant alors brusquement sa configuration de repos. Elle assure ainsi sa fonction de cliquet anti-retour, le verrou 16 étant dans sa position de déverrouillage, tel que représenté sur la figure 8.

C'est dans cette configuration que le couvercle 3 est livré au client final. En cas de besoin, il est possible de remplacer un verrou 16 par la méthode décrite ci-dessus.

On emboîte ensuite le couvercle 3 sur le socle 2 (figures 9, 10). Puis on agit une nouvelle fois sur le levier 25 pour faire pivoter le verrou 16 dans le sens indiqué par son doigt 36 et le faire passer de sa position de déverrouillage à sa position de verrouillage. La languette de blocage 45 glisse alors à son tour sur le bord 50 (figure 11) qui repousse la languette 45 vers la première traverse 41, jusqu'à ce que la dent 47 dépasse le bord 50, la languette 45 reprenant alors brusquement sa configuration de repos et assurant ainsi sa fonction de blocage (figure 12).

Au cours du passage du verrou 16 de sa position de déverrouillage à sa position de verrouillage, le doigt 36 écarte, comme nous l'avons vu ci-dessus, le bord inférieur 30 de la première fenêtre 28 du bord supérieur 33 de la seconde 31, ce qui provoque le rapprochement du couvercle 3 et du socle 2.

Pour l'arrêt en translation du couvercle 3 sur le socle 2, deux surfaces de butée 57, 58 sont prévues, sur le couvercle 3 et sur le socle 2 respectivement, entre lesquelles il existe un interstice 59 en position déverrouillée du verrou 16 (figure 9), qui rétrécit progressivement au cours du verrouillage (figure 11) pour disparaître totalement en position verrouillée, les surfaces de butée 57, 58 étant plaquées l'une contre l'autre (figure 12), en sorte qu'il n'existe alors aucun jeu entre le socle 2 et le couvercle 3.

Pour séparer ces derniers, il suffit d'introduire la pointe d'un outil 60 - en l'occurrence un tournevis - par l'échancrure 43 pratiquée dans le levier 25 au droit de la languette 45, puis, en prenant appui par l'outil 60, à la manière d'un levier, sur le bord 61 formé à la jonction de la paroi frontale 10 et du retour 49, de repousser la tête 48 au moyen de la pointe de l'outil 60, en l'écartant du bord 50 (figure 15).

Une pression supplémentaire sur l'outil 60 permet de relever l'extrémité de manoeuvre 42 du levier 25, qu'il est alors possible d'attraper pour faire pivoter manuellement le verrou 16 vers sa position de déverrouillage.

ll est alors possible de séparer, en le déboîtant, le couvercle 3 du socle 2.

L'outil 60 employé peut présenter une pointe à section rectangulaire, tel qu'un tournevis plat, ou à section circulaire, tel qu'un tournevis cruciforme.

Dans le premier cas, on prévoira pour l'échancrure 43 un profil rectangulaire (figure 3). Dans le second cas, on prévoira par contre, pour l'échancrure 43, un profil arrondi (figure 4).

La description qui vient d'être faite, en référence aux figures 1 à 15, correspond à un premier mode de réalisation du coffret 1.

L'on décrit à présent, de manière succincte, une variante correspondant à un second mode de réalisation illustré sur les figures 16 à 18.

Cette variante est, dans l'ensemble, très proche du premier mode de réalisation. Les références numériques sont conservées pour les éléments communs, et l'on décrit essentiellement les particularités de cette variante.

Ici, le couvercle 3 comporte une cheminée 62 qui, saillant de la paroi latérale 12, vient se loger, en coulissant lors de l'emboîtement, dans un renfoncement 63 ménagé dans la paroi latérale 6 correspondante du socle 2.

La cheminée 62 présente une paroi frontale 64 parallèle à la paroi latérale 12. C'est dans cette paroi frontale 64 qu'est pratiquée la première fenêtre 28.

Le renfoncement 63 présente quant à lui une paroi de fond 65 parallèle à la paroi frontale 64 et contre laquelle cette dernière vient se plaquer en coulissant lors de l'emboîtement. C'est dans cette paroi de fond 65 qu'est pratiquée la seconde fenêtre 31.

Comme on peut le voir sur les figures 16 à 18, le verrou 16 est dépourvu de butée pour limiter sa course et, pour se conformer à la paroi frontale 10 du couvercle 3, son levier 25 est plat.

Quant au doigt 36, il se présente simplement sous la forme d'une languette rigide qui, en position verrouillée (figures 17 et 18), est introduite simultanément dans les deux fenêtres 28, 31. Les parois 64, 65 étant plaquées l'une contre l'autre, le doigt 36 agit à la manière d'une goupille : il est donc sollicité en cisaillement en écartant les bords 30, 33 l'un de l'autre, ce qui garantit une excellente tenue du couvercle 3 sur le socle 2.

Le verrou 16 présente une section en I et comporte une âme 66 qui relie le levier 25 au doigt 36. L'âme 66 s'étend dans un plan perpendiculaire à la fois au levier 25 et au doigt 36, et à l'axe A d'articulation du verrou 16. Cette configuration confère au verrou 16 une grande rigidité, au bénéfice de la tenue du couvercle 3 sur le socle 2.

En outre, l'échancrure 43 prévue pour le passage d'un outil propre à débloquer le verrou 16 est, ici, pratiquée dans la paroi frontale 10 du couvercle 3, et non dans le verrou comme prévu précédemment.

Dans ce qui vient d'être décrit, quatre verrous 16 sont prévus pour le coffret 1. Toutefois, on peut modifier si besoin le nombre de verrous, notamment en fonction de la forme du coffret.

Par ailleurs, bien que les verrous soient, dans l'exemple décrit, montés sur le couvercle du coffret, il est possible, moyennant quelques modifications mineures, de les monter sur le socle.

## Revendications

1. Boîte (1) comportant un socle (2), un couvercle (3) propre à être emboîté sur le socle (2) et, pour la fixation du couvercle (3) au socle (2), un verrou (16) articulé entre une position de verrouillage dans laquelle il assure le verrouillage du couvercle (3) sur le socle (2), et une position de déverrouillage dans laquelle il permet leur séparation, **caractérisée en ce que** le verrou (16) comporte un doigt (36) apte, en position de verrouillage, à venir se loger simultanément dans deux fenêtres (28, 31) pratiquées respectivement dans le couvercle (3) et le socle (2) et à solliciter en permanence le couvercle (3) vers le socle (2) et, en position de déverrouillage, à s'écarter de l'une des fenêtres (28, 31) au moins.

2. Boîte selon la revendication 1, **caractérisée en ce que** le verrou (16) est monté articulé sur le couvercle (3).

3. Boîte selon la revendication 2, **caractérisée en ce que** le verrou (16) est monté pivotant sur le couvercle (3).

4. Boîte selon la revendication 3, **caractérisée en ce que** l'axe (A) d'articulation du verrou (16) est perpendiculaire à la direction d'emboîtement (D).

5. Boîte selon la revendication 3 ou la revendication 4, **caractérisée en ce que** l'axe d'articulation (A) du verrou (16) est formé de deux tourillons (17, 18) en regard, sur lesquels est apte à venir s'encliqueter le verrou (16).

6. Boîte selon l'une des revendications 1 à 5, **caractérisé en ce que** le verrou (16) est muni de moyens (45) pour assurer son propre blocage en position verrouillée.

7. Boîte selon la revendication 6, **caractérisée en ce que** lesdits moyens de blocage (45) sont réversibles.

8. Boîte selon la revendication 7, **caractérisée en ce que** le verrou (16) comporte une languette (45) élastiquement flexible qui, en position de verrouillage du verrou (16), vient en prise avec un bord (50) du couvercle (3) pour bloquer le verrou (16) en position de verrouillage.

9. Boîte selon la revendication 8, **caractérisée en ce que** le verrou (16) présente, au droit de ladite languette (45), une échancrure (43) formant un passage pour la pointe d'un outil propre à écarter la languette (45) dudit bord (50) pour débloquer le verrou (16).

10. Boîte selon l'une des revendications 1 à 9, **caractérisée en ce que** le verrou (16) est muni d'une butée (51) apte, en position de déverrouillage, à venir s'appliquer contre un bord (50) du couvercle (3) pour limiter la course du verrou (16).

11. Boîte selon la revendication 10, **caractérisée en ce que** ladite butée (51) est formée par une languette (52) élastiquement flexible.

12. Boîte selon la revendication 11, **caractérisée en ce que** le couvercle (3) présente un logement (27) pour le verrou (16), délimité par une cloison (54) obstruant l'accès à ladite languette (52).

13. Boîte selon l'une des revendications 1 à 12, **caractérisée en ce que** lesdites fenêtres (28, 31) sont pratiquées dans deux parois (64, 65) appartenant respectivement au couvercle (3) et au socle (2) et qui, lorsque le couvercle (3) est emboîté sur le socle (2), sont plaquées l'une contre l'autre.

14. Boîte selon l'une des revendications 1 à 13, **caractérisée en ce que** le verrou (16) comporte, pour sa propre manoeuvre, un bras (25) formant levier et présentant une face externe (23) qui, en position de verrouillage, affleure une face externe (24) du couvercle (3).

15. Boîte selon l'une des revendications 1 à 14, **caractérisée en ce que** ledit doigt (36) comporte un bras (37) propre, en position de verrouillage du verrou (16), à venir s'appliquer contre un bord inférieur (30) de l'une des fenêtres (28), ce bras (37) étant prolongé par une languette (40) élastiquement flexible en rebroussement, propre, en position de verrouillage du verrou (16), à venir s'appliquer contre un bord supérieur (33) de l'autre fenêtre (31), et à solliciter ledit bord supérieur (33) pour l'éloigner dudit bord inférieur (30).
